# DEMANDE DE BREVET EUROPEEN

(11) **EP 3 415 428 A1**
(43) Date de publication de la demande: **19.12.2018**
(21) Numéro de dépôt: 18177849.9
(22) Date de dépôt: 14.06.2018
(51) Int. Cl.: B64C 39/02, B64D 47/08, G03B 15/00, H04N 5/225

(54) **ACCESSOIRE AMOVIBLE POUR UN SUPPORT D'ACCUEIL TEL QU'UN DRONE ET ENSEMBLE COMPRENANT LE SUPPORT D'ACCUEIL ET L'ACCESSOIRE**

(30) Priorité: 14.06.2017 FR 1755365
(71) Demandeur: Parrot Drones, 75010 Paris (FR)
(72) Inventeur: SANLAVILLE, Thierry, 75015 PARIS (FR); BOUCART, Charles-Edouard, 75005 PARIS (FR); TEXIER, Nicolas, 75017 PARIS (FR); BALLEY, Axel, 75019 PARIS (FR)
(74) Mandataire: Lavoix

(57) **Abrégé**

L'accessoire (12) comprend une partie de couplage configurée pour le couplage amovible de l'accessoire sur le support d'accueil (14), un connecteur (28) configuré pour la connexion électrique de l'accessoire au support d'accueil (14), et au moins un capteur (32) configuré pour générer un signal de sortie représentatif d'une grandeur physique. Le connecteur (28) est directement connecté en sortie du capteur (32) pour la transmission du signal de sortie du capteur (32) au support d'accueil (14) sans traitement du signal de sortie entre le capteur (32) et le support d'accueil (14).

## Description

La présente invention concerne le domaine des accessoires amovibles pour des supports d'accueil, tel qu'un support portable ou un véhicule sans pilote à bord, notamment un drone, c'est-à-dire un aéronef sans pilote à bord.

US2016/0083110A1 divulgue un drone équipé d'une nacelle montable de manière amovible sur le drone et adaptée pour recevoir une caméra pour la capture d'images pendant le vol du drone. La nacelle montable de manière amovible permet d'équiper le drone de la caméra pour la capture d'images pendant le vol du drone, et de démonter la nacelle pour retirer la caméra du drone après la capture des images.

Le montage d'une caméra sur un drone augmente la masse totale en charge du drone, ce qui peut affecter les performances en vol du drone, notamment sa dynamique de vol ou son autonomie en vol.

Un des buts de l'invention est de proposer un accessoire pour un support d'accueil, tel qu'un support portable ou un véhicule sans pilote à bord, notamment un drone, qui puisse capturer de données tout en préservant les performances du support d'accueil.

A cet effet, l'invention propose un accessoire amovible pour un support d'accueil, telle qu'un support portable ou un véhicule sans pilote à bord, en particulier un drone, l'accessoire comprenant une partie de couplage configurée pour le couplage amovible de l'accessoire sur le support d'accueil, un connecteur configuré pour la connexion électrique de l'accessoire au support d'accueil, et au moins un capteur configuré pour générer un signal de sortie représentatif d'une grandeur physique, dans lequel le connecteur est directement connecté en sortie du capteur pour la transmission du signal de sortie du capteur au support d'accueil sans traitement du signal de sortie entre le capteur (32) et le support d'accueil.

Selon des modes de réalisation particuliers, l'accessoire peut comprendre une ou plusieurs des caractéristiques optionnelles suivantes, prises isolément ou selon toutes les combinaisons techniquement possibles :
- le capteur est un composant électronique comprenant un unique boîtier de composant électronique ;
- le boîtier de composant électronique est du type composant monté en surface ;
- le capteur est directement connecté en entrée au connecteur pour la réception de signaux de pilotage du capteur ;
- il comprend une mémoire directement connectée au connecteur pour l'adressage de la mémoire par un calculateur du support d'accueil ;
- au moins un dit capteur est un capteur d'images.
- le connecteur est configuré pour se connecter à un connecteur correspondant du support d'accueil du fait de la fixation de la partie de couplage de l'accessoire sur une partie de couplage correspondante du support d'accueil ;
- il est dépourvu d'unité de traitement du signal pour traiter le signal de sortie du capteur entre la sortie du capteur et le connecteur.

L'invention concerne aussi un ensemble comprenant un support d'accueil telle qu'un support portable ou un véhicule sans pilote à bord, en particulier un drone, et un accessoire tel que défini ci-dessus, le support d'accueil comprenant une partie de couplage configurée pour coopérer avec celle de l'accessoire, un connecteur configuré pour venir en prise avec celui de l'accessoire, et un calculateur configuré pour recevoir et traiter le signal de sortie de chaque capteur.

Selon des modes de réalisation particuliers, l'ensemble peut comprendre une ou plusieurs des caractéristiques optionnelles suivantes, prises isolément ou selon toutes les combinaisons techniquement possibles :
- l'accessoire comprend au moins capteur d'image, le calculateur étant configuré pour mettre en oeuvre au moins un algorithme de traitement d'image choisis parmi les suivants : correction de l'auto-exposition, correction de la balance des blancs, correction du vignettage, correction des couleurs, correction des pixels défectueux, débruitage spatial, débruitage temporel, correction du contraste, et/ou correction de la distorsion optique.
- l'accessoire comprend au moins deux capteurs d'image, le calculateur étant configuré pour mettre en oeuvre au moins un algorithme de traitement d'image choisis parmi les suivants : alignement spatial d'images prises par les capteurs de manière que les bords des images coïncident, combinaisons des images fournies par les capteurs pour former une image assemblée plus grande que l'image fournie par chaque capteur, par exemple une image panoramique plus large que chaque l'image fournie par chaque capteur, notamment une image de vision à 360°, calage spatial des images prises par les différents capteurs, et/ou, combinaisons des images fournies par des capteurs agencés pour une capture d'image en stéréovision, pour former une image tridimensionnelle à partir des images fournies par les capteurs ; et
- le calculateur est configuré pour adresser directement la mémoire de l'accessoire.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue en perspectif illustrant un ensemble formé d'un support d'accueil sous la forme d'un drone et d'un accessoire montable de manière amovible sur le support d'accueil ;
- la Figure 2 est une vue en perspective de détail du support d'accueil et de l'accessoire, illustrant un système de fixation de l'accessoire sur le support d'accueil ;
- la Figure 3 est un schéma bloc illustrant l'ensemble de la Figure 1 ;
- la Figure 4 est une vue en perspective d'un ensemble comprenant le support d'accueil de la Figure 1 et un autre accessoire ; et
- la Figure 5 est une vue de côté d'un ensemble comprenant un support d'accueil sous la forme d'une poignée et l'accessoire des Figures 1 et 2.

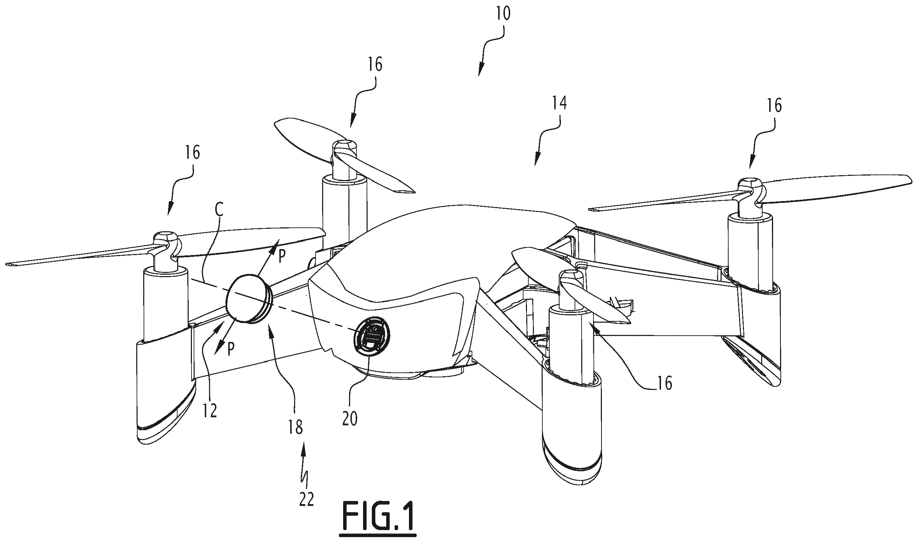

L'ensemble 10 illustré sur la Figure 1 comprend un accessoire 12 montable de manière amovible sur un support d'accueil 14.

Le support d'accueil 14 est ici un drone, c'est-à-dire un aéronef sans pilote à bord, à voilure tournante, comportant au moins un rotor 16 (ou hélice) actionné par au moins un moteur. Sur la Figure 1, le drone comporte une pluralité de rotors 16, et est alors appelé drone multirotor. Le nombre de rotors 16 est en particulier égal à quatre dans cet exemple, et le drone est alors un drone quadrirotor ou « quadricoptère ». En variante, le drone comprend par exemple six rotors ou huit rotors. Dans une variante, le drone est à voilure fixe.

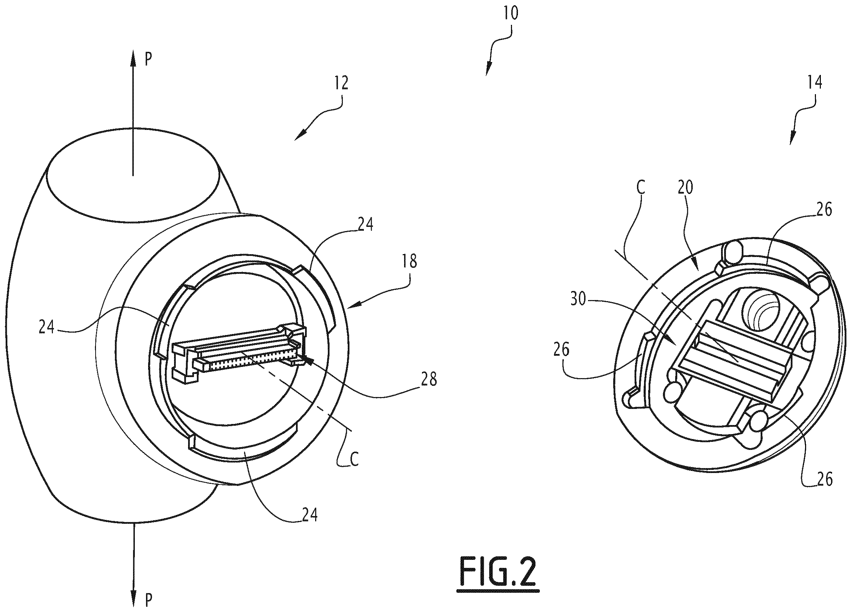

Comme visible sur la Figure 2, l'accessoire 12 et le support d'accueil 14 possèdent chacun une partie de couplage 18, 20 respective, les parties de couplage 18, 20 étant configurées pour coopérer ensemble pour le couplage mécanique de l'accessoire 12 et du support d'accueil 14. Les parties de couplage 18, 20 forment ensemble un mécanisme de couplage 22.

Le mécanisme de couplage 22 est par exemple un mécanisme de couplage à montage rapide et démontage rapide. Ceci facilite le couplage et le découplage de l'accessoire 12 et du support d'accueil 14.

Dans l'exemple illustré, le mécanisme de couplage 22 est du type à baïonnette. Le couplage de l'accessoire 12 au support d'accueil 14 nécessite d'engager les parties de couplage 18, 20 l'une avec l'autre suivant un axe de couplage C, puis de faire pivoter les parties de couplage 18, 20 l'une par rapport à l'autre autour de l'axe de couplage C pour verrouiller le mécanisme de couplage 22.

Pour ce faire, par exemple, l'une des parties de couplage 18, 20 comprend au moins un ergot 24, et l'autre comprend au moins une gorge 26, chaque gorge 26 étant propre à recevoir un ergot 24 associé, chaque gorge 26 comprenant un tronçon d'engagement s'étendant axialement suivant l'axe de couplage C prolongé par un tronçon de verrouillage s'étendant circonférentiellement autour de l'axe de couplage C.

Dans l'exemple illustré, des ergots 24 sont prévus sur la partie de couplage 18 de l'accessoire 12 et des gorges 26 sont prévues sur la partie de couplage 20 du support d'accueil 14. Dans une variante, la disposition des ergots 24 et des gorges 26 est inversée.

L'accessoire 12 et le support d'accueil 14 comprennent chacun un connecteur 28, 30 respectif, les connecteurs 28, 30 étant configurés pour venir en prise l'un avec l'autre pour la connexion électrique de l'accessoire 12 avec le support d'accueil 14. Les connecteurs 28, 30 comportent chacun une pluralité de contacts électriques.

Les connecteurs 28, 30 sont ici disposés de manière à venir en prise du fait du couplage de l'accessoire 12 sur le support d'accueil 14. Plus spécifiquement, les connecteurs 28, 30 sont disposés de manière à venir en prise du fait de la réunion des parties de couplage 18, 20.

Dans l'exemple illustré, les connecteurs 28, 30 sont disposés de manière à s'engager l'un dans l'autre suivant l'axe de couplage C du fait de la réunion des parties de couplage 18, 20.

Tel qu'illustrées, les parties de couplage 18, 20 présentent la forme de bagues, chaque connecteur 28, 30 étant disposés à l'intérieur de la partie de couplage 18, 20 correspondante.

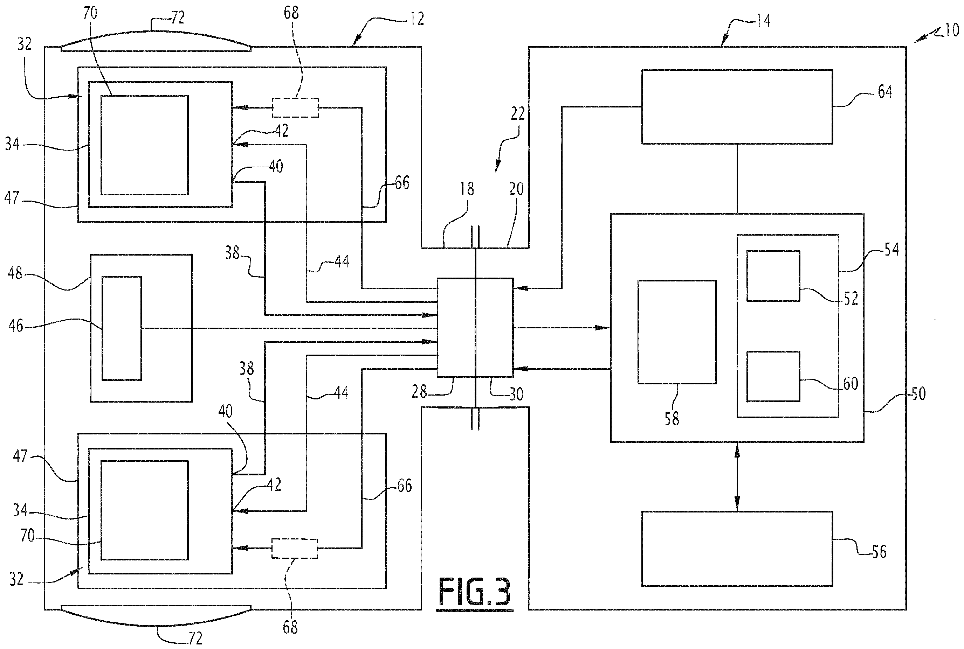

Comme illustré sur la Figure 3, l'accessoire 12 comprend au moins un capteur 32 configuré pour générer un signal de sortie représentatif d'une grandeur physique mesurée par le capteur 32.

Dans l'exemple illustré, l'accessoire 12 comprend deux capteurs 32 distincts. En variante, l'accessoire 12 comprend un seul capteur ou plus de deux capteurs.

Chaque capteur 32 se présente sous la forme d'un composant électronique comprenant un unique boîtier de composant électronique 34. Chaque capteur 32 est par exemple du type composant monté en surface (ou CMS). Un tel composant est prévu pour être appliqué sur une surface, en particulier une surface d'un circuit imprimé.

Le connecteur 28 de l'accessoire 12 est connecté directement en sortie de chaque capteur 32. Le signal de sortie de chaque capteur 32 est transmis directement au connecteur 28 de l'accessoire 12 sans traitement du signal de sortie le capteur 32 et le connecteur 28 de l'accessoire 12.

Le connecteur 28 de l'accessoire 12 est connecté à la sortie 40 de chaque capteur 32, délivrant le signal de sortie de ce capteur 32, par un bus de communication 38 de sortie s'étendant entre la sortie 40 du capteur 32 et le connecteur 28 de l'accessoire 12.

Chaque capteur 32 comprend au moins une entrée 42 connectée directement au connecteur 28 de l'accessoire 12 pour la réception de signaux d'entrée. Des signaux d'entrée sont reçus directement par chaque capteur 32 en provenance du connecteur 28 de l'accessoire 12 sans traitement entre le connecteur 28 de l'accessoire 12 et le capteur 32.

Le connecteur 28 de l'accessoire 12 est connecté directement à l'entrée 42 de chaque capteur 32 par un bus de communication 44 d'entrée s'étendant entre l'entrée du capteur 32 et le connecteur d'accessoire 28.

Des signaux d'entrée de chaque capteur 32 sont par exemple des signaux de pilotage du capteur 32.

De préférence, l'accessoire 12 comprend en outre un boitier, la partie de couplage de l'accessoire 12, le connecteur 28 et chaque capteur 32 étant fixés sur le boitier et/ou reçus dans le boitier.

En option, l'accessoire 12 comprend une mémoire 46 connectée directement au connecteur 28 de l'accessoire 12. L'accessoire 12 comprend ici un bus de communication 48 reliant directement la mémoire 46 au connecteur 28 de l'accessoire 12.

La mémoire 46 contient des données d'identification de l'accessoire 12 et/ou des données de configuration de l'accessoire 12.

La mémoire 46 connectée directement au connecteur 28 de l'accessoire 12 est adressable (i.e. interrogeable) directement par un calculateur du support d'accueil 14 connecté à l'accessoire 12 par l'intermédiaire du connecteur 28 de l'accessoire 12.

La mémoire 46 est par exemple une mémoire morte, en particulier une mémoire morte effaçable et programmable ou EPROM (pour « *Ereasable et Programmable Random Access Memory* » en anglais).

La mémoire 46 est de préférence prévue sous la forme d'un composant électronique comprenant un unique boîtier de composant électronique.

Dans l'exemple illustré, l'accessoire 12 comprend un circuit imprimé 47 respectif pour chaque capteur 32. Il comprend en outre un circuit imprimé 48 sur lequel est fixé la mémoire d'accessoire 46. En variante, l'accessoire 12 comprend un seul circuit imprimé sur lequel est fixé chaque capteur 32. La mémoire 46 est de préférence également fixée sur cet unique circuit imprimé.

Le support d'accueil 14 comprend un calculateur 50 connecté au connecteur 20 du support d'accueil 14. Lorsque l'accessoire 12 est connecté au support d'accueil 14, le calculateur 50 est connecté à chaque capteur 32, par l'intermédiaire des connecteurs 28, 30 en prise l'un avec l'autre.

Le calculateur 50 reçoit le signal de sortie de chaque capteur 32 sans traitement du signal de sortie du capteur 32 entre la sortie 40 du capteur 32 situé dans l'accessoire 12 et le calculateur 50 situé dans support d'accueil 14.

Le calculateur 50 comprend au moins un module de traitement 52, chaque module de traitement 52 étant configuré pour traiter le signal de sortie d'au moins un capteur 32, reçu par le calculateur 50.

Le calculateur 50 comprend par exemple au moins un module de traitement 52 configuré pour le stockage du signal de sortie dans une mémoire 54 du calculateur 50, par exemple en vue de sa récupération ultérieure par l'utilisateur.

En variante ou en option, le calculateur 50 comprend au moins un module de traitement 52 configuré pour la transmission du signal de sortie à un autre dispositif électronique distinct du support d'accueil 14, par l'intermédiaire d'un dispositif de communication 56 intégré au support d'accueil 14.

Le dispositif de communication 56 est par exemple un dispositif de radiocommunication pour l'échange de signaux radioélectriques à distance avec un système électronique distant, par exemple un système électronique de guidage du support d'accueil 14 prévu sous la forme d'un drone.

En variante ou en option, le calculateur 50 comprend au moins un module de traitement 52 configuré pour mettre en oeuvre un algorithme de traitement du signal de sortie d'au moins un capteur 32 pour corriger, améliorer et/ou transformer le signal de sortie, par exemple en combinant les signaux de sortie de plusieurs capteurs 32 de l'accessoire 12.

Dans l'exemple illustré, le calculateur 50 comprend la mémoire 54 et un processeur 58.

Chaque module de traitement 52 est prévu sous la forme d'un programme informatique stocké dans la mémoire 54 du calculateur 50 et comprenant des instructions de code exécutables par le processeur 58 du calculateur 50.

En variante, au moins un module de traitement 52 est prévu sous la forme d'un circuit intégré dédié ou ASIC (pour « *Application Specific Integrated Circuit* » en anglais) ou d'un composant logique programmable, par exemple un FPGA (pour « *Field Programmable Gate Array* » en anglais), configuré ou programmé pour le traitement d'au moins un signal de sortie d'un capteur 32 de l'accessoire 12.

Dans un exemple de réalisation, le calculateur 50 comprend au moins un pilote informatique 60 configuré pour piloter au moins un capteur 32 d'un accessoire 12 propre à être couplé au support d'accueil 14.

Dans un mode de réalisation, chaque pilote informatique 60 est un programme informatique stocké dans la mémoire 54 du calculateur 50 et exécutable par le processeur 58 pour piloter un capteur 32 de l'accessoire 12. Chaque pilote informatique 60 est associé à un capteur 32 déterminé.

Lorsque l'accessoire 12 est connecté au support d'accueil 14, les instructions de pilotage générées par un pilote informatique 60 du calculateur 50 pour le pilotage d'un capteur 32 de l'accessoire 12 sont envoyées à une entrée 42 de ce capteur 32 par l'intermédiaire du bus de communication 44 d'entrée.

Avantageusement, le calculateur 50 comprend plusieurs pilotes informatiques 60 stockés dans sa mémoire 54, chaque pilote informatique 60 étant configuré pour le pilotage d'un capteur 32 déterminé, le calculateur 50 étant configuré pour ouvrir au moins un pilote informatique 60 nécessaire pour piloter chaque capteur 32 de l'accessoire 12 à partir d'une mémoire 54 du calculateur 50 contenant des pilotes informatiques 60, en fonction de données d'identification et/ou de données de configuration contenues dans la mémoire 46 de l'accessoire 12 couplé au support d'accueil 14.

Lorsque l'accessoire 12 est connecté au support d'accueil 14, le calculateur 50 est connecté à la mémoire 46 de l'accessoire 12.

Le calculateur 50 peut adresser (i.e. interroger) directement la mémoire 46 de l'accessoire 12 pour identifier l'accessoire 12 et/ou pour déterminer la configuration de l'accessoire 12, et pour charger le ou les pilote(s) informatique(s) 60 nécessaire(s) au pilotage de chaque capteur 32 de l'accessoire 12.

De préférence, le calculateur 50 est configuré pour commander le support d'accueil 14.

Dans l'exemple illustré, dans lequel le support d'accueil 14 est un drone, le calculateur 50 est par exemple configuré pour le pilotage du drone.

Le calculateur 50 comprend par exemple un pilote automatique propre à réaliser une assistance au pilotage, le calculateur 50 recevant des instructions de pilotage saisie par un utilisateur à l'aide d'un système électronique de guidage distant, et/ou un pilotage automatique autonome, le calculateur 50 pilotant le drone de manière autonome, selon au moins un mode de pilotage autonome défini, par exemple un suivi d'une cible, un suivi d'une trajectoire, un suivi d'un trajet avec un ou plusieurs points de passage obligés.

Des instructions de pilotage provenant d'un système électronique de guidage distant sont par exemple reçues par l'intermédiaire du dispositif de communication 56.

De préférence, l'accessoire 12 est alimenté en énergie par le support d'accueil 14. Plus spécifiquement, le support d'accueil 14 intègre une source d'énergie 64, par exemple une batterie électrique, l'accessoire 12 étant alimenté en énergie par la source d'énergie 64 lorsque l'accessoire 12 est connecté au support d'accueil 14.

Les connecteurs 28, 30 sont configurés pour la transmission d'énergie entre le support d'accueil 14 et l'accessoire 12.

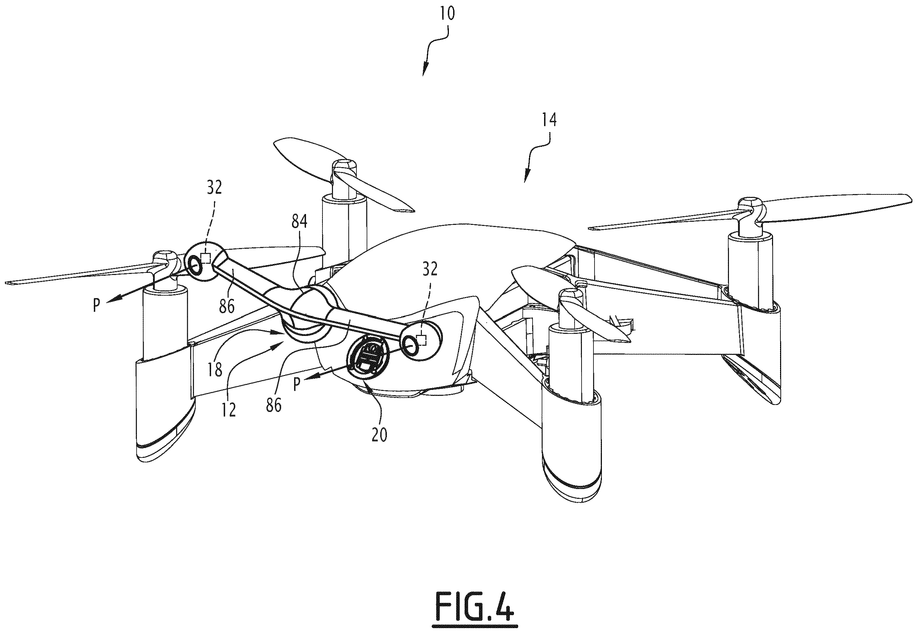

Comme illustré sur la Figure 4, l'accessoire 12 comprend un bus d'alimentation 66 reliant chaque capteur 32 au connecteur d'accessoire 18 pour l'alimentation en énergie du capteur 32.

Chaque bus d'alimentation 66 associé à un capteur 32 s'étend entre le connecteur 28 et au moins une entrée d'alimentation de ce capteur 32.

Dans un mode de réalisation, le bus d'alimentation 66 associé à au moins un des capteurs 32 ou à chaque capteur 32 relie directement le connecteur 28 à une entrée d'alimentation de ce capteur 32.

En variante, l'accessoire 12 comprend un circuit de filtrage 68 disposé en amont d'au moins une entrée d'alimentation d'au moins des capteurs 32 ou de chacun des capteurs 32, pour le filtrage de l'alimentation. Chaque circuit de filtrage 68 comprend par exemple un ou plusieurs composant(s) électrique(s) passif(s).

Dans le mode de réalisation illustré, l'accessoire 12 comprend deux capteurs 32 qui sont des capteurs d'images. Chaque capteur 32 délivre un signal de sortie numérique représentatif d'une image.

L'accessoire 12 comprend un objectif optique 72 associé à chaque capteur 32, chaque objectif optique 72 étant disposé de manière que la lumière parvient au capteur 32 associé à travers l'objectif optique 72.

Le signal de sortie de chaque capteur 32 est envoyé de la sortie du capteur 32 au connecteur 28 de l'accessoire 12 sans traitement du signal de sortie entre la sortie 40 du capteur 32 et le connecteur 28. La sortie 40 du capteur 32 délivrant le signal de sortie représentatif d'images capturées par le capteur 32 est connectée directement au connecteur 28 de l'accessoire 12.

Chaque capteur 32 est un composant électronique comprenant un unique boîtier de composant électronique 34, ayant une sortie 40 délivrant le signal de sortie représentatif d'une image.

Chaque capteur 32 comprend un photodétecteur 70 matriciel propre à détecter des photons, et délivre un signal de sortie correspondant aux photons détectés par le photodétecteur 70.

Chaque capteur 32 délivre par exemple un signal de sortie dans un format RAW (ou format brut).

Le calculateur 50 intégré au support d'accueil 14 comprend le ou chaque pilote informatique 60 nécessaire pour le pilotage de chaque capteur 32 directement par le calculateur 50. A la connexion du l'accessoire 12 au support d'accueil 14, le calculateur 50 ouvre les pilotes informatiques 60 adéquats.

Le calculateur 50 intégré comprend par exemple au moins un module de traitement 52 configuré pour appliquer au moins un algorithme de traitement d'image au signal de sortie de chaque capteur 32.

Le calculateur 50 est configuré pour appliquer au moins un algorithme de traitement d'image destiné à corriger une image et/ou à améliorer une image, par exemple au moins un algorithme de traitement d'image choisis parmi les suivants :
- correction de l'auto-exposition ;
- correction de la balance des blancs ;
- correction du vignettage ;
- correction des couleurs ;
- correction des pixels défectueux ;
- débruitage spatial ;
- débruitage temporel ;
- correction du contraste ; et/ou
- correction de la distorsion optique.

Dans un mode de réalisation, le calculateur 50 est configuré pour appliquer chacun de ces algorithmes de traitement d'image au signal de sortie de chaque capteur 32.

Lorsque l'accessoire 12 comprend au moins deux capteurs 32 d'image distincts, avantageusement, le calculateur 50 est configuré pour mettre en oeuvre au moins un algorithme de traitement d'image configuré pour la combinaison des images respectives fournies par les capteurs 32.

Le calculateur 50 est par exemple configuré pour mettre en oeuvre au moins un algorithme de traitement d'image configuré pour le calcul d'images de vision panoramique ou à 360° à partir des signaux de sortie fournis par les capteurs 32, en combinant les images fournies par les capteurs 32 pour former une image assemblée plus grande que l'image élémentaire fournie par chaque capteur 32.

Le calculateur 50 est par exemple configuré pour mettre en oeuvre un ou plusieurs des algorithmes de traitement d'image suivants :
- alignement spatial des images prises par les différents capteurs 32 de manière que les bords des images coïncident ; et/ou
- combinaison des images élémentaires fournies par les capteurs 32 pour former une image assemblée plus grande que l'image élémentaire fournie par chaque capteur 32, par exemple une image assemblée plus large que l'image élémentaire fournies par chaque capteur 32, en particulier une image de vision à 360°.

Dans l'exemple illustré, l'accessoire 12 comprend deux capteurs 32, les capteurs 32 et/ou les objectifs optiques 72 associés étant agencés de sorte que les axes de prise de vue des deux capteurs 32 sont sensiblement coaxiaux, les capteurs 32 visant en directions opposées.

En variante, il est possible de prévoir plus de deux capteurs 32 pour réaliser une image de vision panoramique ou à 360°, par exemple au moins trois capteurs 32 visant suivant plusieurs directions distinctes sensiblement radiales par rapport à un centre.

L'accessoire de la Figure 4 diffère de celui de la Figure 1 en ce qu'il comprend deux capteurs d'images 32 distincts agencés pour la capture d'images d'une scène en stéréovision. Les capteurs d'images 32 fournissent des images de la même scène, les images étant décalées spatialement.

La capture d'images d'une scène en stéréovision permet par exemple de calculer une reconstruction tridimensionnelle (3D) de la scène et/ou de calculer des images en 3D à partir des images des capteurs 32.

Comme illustré sur la Figure 4, l'accessoire 12 comprend une base 84 portant la partie de couplage 18 de l'accessoire 12 et deux bras 86 s'étendant à partir de la base 84, chaque bras 86 portant un capteur 32 respectif à son extrémité opposée à la base 84.

Les bras 84 sont ici colinéaires et s'étendent à l'opposé l'un de l'autre à partir de la base. En variante, les bras 84 ne sont pas colinéaires.

Les axes de prise de vue P de deux capteurs 32 sont sensiblement parallèles et distincts. L'entraxe entre les axes de prise de vue des deux capteurs 32 est non nul. Il est par exemple compris entre 1 et 30 cm. Les images capturées

Le calculateur 50 est par exemple configuré pour mettre en oeuvre un ou plusieurs des algorithmes de traitement d'image suivants :
- calage spatial des images prises par les différents capteurs 32 ; et/ou
- combinaisons des images fournies par les capteurs 32 pour former une image tridimensionnelle à partir des images fournies par les capteurs 32.

Dans les exemples des Figures 1 à 4, les accessoires 12 possèdent deux capteurs 32 d'image.

En variante, il est possible de prévoir un accessoire comprenant un seul capteur d'image.

Dans le cas d'un support d'accueil 14 sous la forme d'un véhicule sans pilote à bord, tel qu'un drone, muni d'un accessoire possédant au moins un capteur d'image, le traitement et l'envoi des images en direct à un système électronique de guidage distant muni d'un dispositif de visualisation d'image permet à un utilisateur de visualiser en direct les images prises par l'accessoire 12.

Dans un exemple particulier dans lequel le système électronique de guidage permet un pilotage en immersion ou FPV (pour « *First Person View »* en anglais), le calculateur peut traiter les signaux fournis par deux capteurs 32 d'image de l'accessoire 12 pour reconstituer une image à 360° ou une image 3D et l'envoyer au système électronique de guidage distant par l'intermédiaire d'un dispositif de communication 56 embarqué du véhicule sans pilote à bord.

Dans le cas d'un support d'accueil 14 sous la forme d'un véhicule sans pilote à bord, tel qu'un drone, muni d'un accessoire 12 possédant au moins un capteur 32 d'image pour la transmission en direct des images à un système électronique de guidage distant, de préférence le traitement du signal de sortie de chaque capteur 32 est réalisé par le calculateur 50 du support d'accueil 14 pour l'envoie d'un signal d'image prêt à afficher au système électronique de guidage distant, sans traitement nécessaire au sein du système électronique de guidage distant autre que les traitements pour afficher les images reçues sur un dispositif de visualisation du système électronique de guidage distant, sans correction, amélioration ou transformation des images reçues.

En fonctionnement, l'accessoire 12 est initialement séparé ou découplé du support d'accueil 14. L'utilisateur couple l'accessoire 12 au support d'accueil 14 manuellement, et connecte l'accessoire au support d'accueil. Avantageusement, la connexion est réalisée du fait du couplage.

La connexion de l'accessoire 12 au support d'accueil 14 entraîne la connexion du calculateur 50 à la mémoire 46 de l'accessoire 12. Le calculateur 50 adresse directement la mémoire 46 de l'accessoire 12 pour récupérer des données d'identification et/ des données de configuration stockées dans la mémoire 46 de l'accessoire 12.

Le calculateur 50 détermine, en fonction de données d'identification, le type de l'accessoire 12, en particulier, le(s) capteur(s) 32 présent(s) sur l'accessoire 12. Le calculateur 50 peut par exemple déterminer si l'accessoire 12 comprend un capteur 32 d'image ou plusieurs capteurs 32 d'image. Dans le cas de plusieurs capteurs 32 d'image, le calculateur 50 peut par exemple déterminer si les capteurs 32 sont agencés pour une vision panoramique ou à 360° ou pour une capture d'images en stéréovision.

En fonction de la version et/ou de la configuration d'un capteur 32, le calculateur 50 charge un ou plusieurs pilotes informatiques 60 pour le pilotage de chaque capteur 32 et/ou un ou plusieurs modules de traitement 52 pour le traitement du signal de sortie de chaque capteur 32. Chaque pilote informatique 60 et/ou chaque module de traitement 52 nécessaire est par exemple chargé dans une mémoire vive du calculateur 50, en vue de leur exécution.

Par exemple, si l'accessoire 12 possède deux capteurs d'image 32 agencés pour une vision à 360°, il est utile de charger un module de traitement 52 configuré pour réaliser une combinaison d'images pour générer une grande image à partir de deux petites images prise par deux capteurs d'image distincts, et il n'est pas utile de charger un module de traitement 52 configuré pour le calcul d'images en 3D à partir d'images capturée en stéréovision.

Ensuite, pendant que l'utilisateur utilise le support d'accueil 14 muni de l'accessoire 12, le calculateur 50 pilote chaque capteur 32 de l'accessoire 12. Le signal de mesure de chaque capteur 32 de l'accessoire 12 est transmis au support d'accueil 14 sans être traité entre la sortie 40 du capteur 32 et le connecteur 28 de l'accessoire 12, et le calculateur 50 traite le signal de sortie fourni par le capteur 32 sans traitement de ce signal de sortie entre la sortie 40 du capteur 32 et le connecteur 28 de l'accessoire 12.

Aucun traitement du signal de sortie de chaque capteur 32 n'est réalisé dans l'accessoire 12. Le premier traitement du signal de sortie de chaque capteur 32 est réalisé dans le calculateur 50 du support d'accueil 14.

Dans les exemples décrit ci-dessus, les accessoires 12 possèdent des capteurs 32 d'image. Cependant, l'invention n'est pas limitée à un accessoire 12 muni d'un ou plusieurs capteurs 32 d'image.

En variante, il est possible de prévoir un accessoire avec au moins un capteur 32 de type différent. En outre, un accessoire peut comprendre un ou plusieurs capteurs 32 distincts, de même type ou de types différents.

Un accessoire 12 peut comprendre un ou plusieurs capteurs pour mesurer des grandeurs physiques tel qu'une température de l'air, une pression de l'air, une température d'une surface, une distance, un son, des rayonnements (infrarouge, ultraviolet, alpha, bêta et/ou gamma), une orientation, une accélération, une position géographique...

Ainsi, de manière générale, l'accessoire comprend un ou plusieurs capteurs 32 choisis parmi : un capteur d'image, un capteur de température, un capteur de pression, un capteur de son, un capteur de rayonnement (infrarouge, ultraviolet, alpha, bêta et/ou gamma), une caméra temps de vol, une centrale inertielle...

Dans tous les cas, le connecteur 28 de l'accessoire 12 étant connecté en sortie de chaque capteur 32 pour la transmission du signal de sortie de chaque capteur 32 au support d'accueil 14 recevant l'accessoire 12, sans traitement du signal de sortie entre le capteur 32 et le connecteur 28 de l'accessoire 12, et en vue du traitement du signal de sortie du capteur 32 par le calculateur 50 du support d'accueil 14.

De préférence, chaque capteur 32 est un composant électronique comprenant un unique boîtier de composant électrique 34 possédant une sortie délivrant le signal de sortie du capteur 32 connectée directement au connecteur 28 de l'accessoire 12 par un bus de communication.

Par ailleurs, l'invention n'est pas limitée à un support d'accueil sous la forme d'un drone. Il est possible de prévoir un support d'accueil sous la forme d'un véhicule sans pilote à bord du type voiture télécommandée.

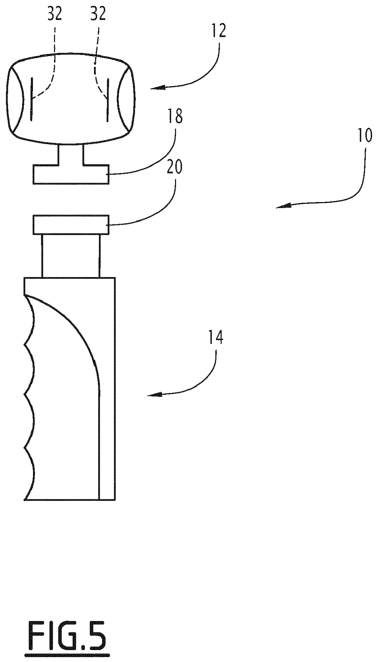

Comme illustré sur la Figure 5, il est également possible de prévoir un support d'accueil 14 sous la forme d'une poignée de manipulation sur laquelle l'accessoire 12 peut être couplé de manière amovible.

L'accessoire 12 amovible montable sur un support d'accueil 14 et muni d'un capteur 32 en étant dépourvu de moyens de traitement du signal de sortie du capteur entre la sortie 40 du capteur 32 et un connecteur 28 de l'accessoire 12 pour sa connexion au support d'accueil 14, permet d'obtenir un accessoire 12 qui est léger et compact.

Ceci représente un avantage pour son couplage à un véhicule sans pilote à bord, en particulier un drone. En effet, du fait de sa légèreté et de sa compacité, l'accessoire a un impact réduit sur les performances du véhicule sans pilote à bord, et notamment sur son autonomie en énergie.

Cela est également avantageux dans le cas d'un support d'accueil portable, car cela préserve la légèreté du support d'accueil 14 portable, ce qui facilite sa manipulation par l'utilisateur.

Le support d'accueil 14 configuré pour le traitement du signal du capteur à l'aide d'un calculateur 50 intégré au support d'accueil 41, permet d'assurer un traitement du signal de sortie du capteur 32 au sein de l'ensemble formé par l'accessoire 12 et le support d'accueil 14, de façon à obtenir un signal traité qui puisse par exemple être transmis à un système électronique distant ou stocker dans une mémoire du calculateur 50 et récupéré ultérieurement.

Il est possible de configurer le calculateur 50 du support d'accueil 14 pour permettre le couplage de plusieurs accessoires 12 possédant des capteurs de type différents ou des combinaisons de capteurs incluant des capteurs différents.

Ainsi, il est possible de prévoir une gamme d'accessoires 12 distincts propres à être couplés au même support d'accueil 14, le support d'accueil 14 étant configuré pour détecter le type d'accessoire 12 couplé au support d'accueil 14 et pour traiter le signal de sortie de chaque capteur 32 de l'accessoire 12 en fonction du type d'accessoire 12 couplé au support d'accueil 14.

De même il est possible de prévoir plusieurs supports d'accueil 14 de types différents, propres à recevoir un même accessoire 12.

Il est par exemple possible de prévoir un support portable et un véhicule sans pilote à bord, chacun propre à recevoir un même accessoire 12 et à traiter le signal de sortie de chaque capteur 32 de cet accessoire 12.

## Revendications

1. Accessoire (12) amovible pour un support d'accueil (14), telle qu'un support portable ou un véhicule sans pilote à bord, en particulier un drone, l'accessoire (12) comprenant une partie de couplage configurée pour le couplage amovible de l'accessoire sur le support d'accueil (14), un connecteur (28) configuré pour la connexion électrique de l'accessoire au support d'accueil (14), et au moins un capteur (32) configuré pour générer un signal de sortie représentatif d'une grandeur physique, dans lequel le connecteur (28) est directement connecté en sortie du capteur (32) pour la transmission du signal de sortie du capteur (32) au support d'accueil (14) sans traitement du signal de sortie entre le capteur (32) et le support d'accueil (14).

2. Accessoire selon la revendication 1, dans lequel le capteur est un composant électronique comprenant un unique boîtier de composant électronique (34).

3. Accessoire selon la revendication 2, dans lequel le boîtier de composant électronique (34) est du type composant monté en surface.

4. Accessoire selon l'une quelconque des revendications précédentes, dans lequel le capteur (32) est directement connecté en entrée au connecteur (28) pour la réception de signaux de pilotage du capteur (32).

5. Accessoire selon l'une quelconque des revendications précédentes, comprenant une mémoire (46) directement connectée au connecteur (28) pour l'adressage de la mémoire (46) par un calculateur du support d'accueil (14).

6. Accessoire selon l'une quelconque des revendications précédentes, dans lequel au moins un dit capteur (32) est un capteur d'images.

7. Accessoire selon l'une quelconque des revendications précédentes, dans lequel le connecteur (28) est configuré pour se connecter à un connecteur (30) correspondant du support d'accueil (14) du fait de la fixation de la partie de couplage (18) de l'accessoire sur une partie de couplage (20) correspondante du support d'accueil (14).

8. Accessoire selon l'une quelconque des revendications précédentes, dépourvu d'unité de traitement du signal pour traiter le signal de sortie du capteur (32) entre la sortie (40) du capteur (32) et le connecteur (28).

9. Ensemble comprenant un support d'accueil (14) telle qu'un support portable ou un véhicule sans pilote à bord, en particulier un drone, et un accessoire (12) selon l'une quelconque des revendications précédentes, le support d'accueil (14) comprenant une partie de couplage (20) configurée pour coopérer avec celle (18) de l'accessoire (12), un connecteur (30) configuré pour venir en prise avec celui (28) de l'accessoire (12), et un calculateur (50) configuré pour recevoir et traiter le signal de sortie de chaque capteur (32).

10. Ensemble selon la revendication 9, dans lequel l'accessoire comprend au moins capteur (32) d'image, le calculateur (50) étant configuré pour mettre en oeuvre au moins un algorithme de traitement d'image choisis parmi les suivants :
- correction de l'auto-exposition ;
- correction de la balance des blancs ;
- correction du vignettage ;
- correction des couleurs ;
- correction des pixels défectueux ;
- débruitage spatial ;
- débruitage temporel ;
- correction du contraste ; et/ou
- correction de la distorsion optique.

11. Ensemble selon la revendication 9 ou 10, dans lequel l'accessoire comprend au moins deux capteurs (32) d'image, le calculateur (50) étant configuré pour mettre en oeuvre au moins un algorithme de traitement d'image choisis parmi les suivants :
- alignement spatial d'images prises par les capteurs de manière que les bords des images coïncident ;
- combinaisons des images fournies par les capteurs (32) pour former une image assemblée plus grande que l'image fournie par chaque capteur (32), par exemple une image panoramique plus large que chaque l'image fournie par chaque capteur (32), notamment une image de vision à 360° ;
- calage spatial des images prises par les différents capteurs (32) ; et/ou
- combinaisons des images fournies par des capteurs (32) agencés pour une capture d'image en stéréovision, pour former une image tridimensionnelle (3D) à partir des images fournies par les capteurs (32).

12. Ensemble selon la revendication 10 et/ou la revendication 11 prise(s) en combinaison avec la revendication 5, le calculateur (50) étant configuré pour adresser directement la mémoire (46) de l'accessoire (12).
